Europäisches Patentamt

European Patent Office

Office européen des brevets

(11) Numéro de publication: **0 423 018 A1**

# DEMANDE DE BREVET EUROPEEN

(21) Numéro de dépôt: 90402805.7

(22) Date de dépôt: 09.10.90

(51) Int. Cl.⁵: **H04N 1/40**

(30) Priorité: 09.10.89 FR 8913143

(43) Date de publication de la demande:
17.04.91 Bulletin 91/16

(84) Etats contractants désignés:
AT BE CH DE DK ES FR GB GR IT LI LU NL SE

(71) Demandeur: SOCIETE D'APPLICATIONS GENERALES D'ELECTRICITE ET DE MECANIQUE S A G E M

6, Avenue d'Iéna
F-75783 Paris Cedex 16(FR)

(72) Inventeur: Frederic, Alain
2, rue du Pays de France
F-95000 Cergy(FR)

(74) Mandataire: Bloch, Gérard et al
2, square de l'Avenue du Bois
F-75116 Paris(FR)

(54) Dispositif de transformation d'un signal d'analyse d'image en un signal binaire.

(57) Un comparateur (1) compare la valeur instantanée du signal d'analyse d'image (V) à celle d'un signal de seuil (S) et délivre le signal binaire (VB). Le signal de seuil (S), engendré par un circuit (2), reste compris entre la moyenne, sur un intervalle de temps, du signal d'analyse d'image (V) et d'un signal frontière (F) de valeur constante ou lentement variable, intermédiaire entre les deux valeurs extrêmes, correspondant respectivement au noir et au blanc, susceptibles d'être prises par le signal d'analyse d'image (V).

Le dispositif trouve en particulier son application dans les télécopieurs.

FIG.1

La présente invention a pour objet un dispositif de transformation d'un signal d'analyse d'image en un signal binaire, comprenant des moyens de comparaison de la valeur instantanée dudit signal d'analyse d'image à la valeur d'un signal de seuil et des premiers moyens de génération pour engendrer ledit signal de seuil en réponse à la valeur moyenne, sur un premier intervalle de temps, dudit signal d'analyse d'image.

Un tel dispositif est notamment utilisé dans les télécopieurs.

Dans un télécopieur, l'image à reproduire à distance ou, le cas échéant, localement, est analysée par un dispositif qui délivre un signal d'analyse d'image. Ce signal résulte de la détection de l'intensité lumineuse réfléchie par le document porteur de l'image, éclairé par une lampe. Par exemple la valeur du signal est maximale pour un point d'image blanc, et minimale pour un point d'image noir. L'image est analysée ligne par ligne, chaque ligne étant analysée point par point. Compte tenu de la vitesse à laquelle il est nécessaire d'analyser l'image, et de la bande passante limitée des circuits d'analyse, le signal d'analyse d'image n'est pas un signal binaire, même lorsque l'image analysée ne comprend que des points noirs ou des points blancs. Par exemple, dans le cas d'un point blanc isolé au milieu d'une ligne de points noirs, on constate que le pic qui traduit la présence du point blanc ne dure pas assez longtemps pour que sa valeur maximale soit effectivement égale à celle correspondant normalement au blanc. De même, dans le cas d'un point noir isolé au milieu d'une ligne de points blancs, le creux qui traduit la présence du point noir ne dure pas assez longtemps pour que sa valeur minimale soit effectivement égale à celle correspondant normalement au noir. Par ailleurs, le niveau de blanc, ou celui qui doit être considéré comme tel, peut varier considérablement d'une image à l'autre, ou même d'une partie à l'autre de la même image, notamment selon la nature et la couleur du support. Il résulte de ces considérations que le signal d'analyse d'image présente des caractéristiques fluctuantes.

Or, il est souvent nécessaire de transformer le signal d'analyse d'image en un signal binaire, tant en vue de simplifier les traitements auxquels il est soumis pour être transmis à distance, qu'en vue de la commande de dispositifs d'impression en noir et blanc ne pouvant restituer aucune demi-teinte.

Cette transformation s'effectue, de façon connue, par comparaison du signal d'analyse d'image à un seuil de décision noir/blanc. Toutefois, les caractéristiques évoquées plus haut du signal d'analyse d'image conduisent à de mauvais résultats si l'on utilise un seuil de décision fixe, indépendant du signal d'analyse. Aussi, pour éviter cet inconvénient, il est connu d'utiliser non pas un seuil de décision fixe, mais un seuil de décision adapté au signal d'analyse d'image pour suivre les fluctuations de ses caractéristiques.

Par exemple, comme le décrit la demande DE-A-3 433 493, on engendre un signal de seuil en réponse à une valeur moyenne du signal d'analyse d'image, obtenue à partir des valeurs prises par ce signal avant sa valeur comparée. Plus précisément, la valeur du signal de seuil est calculée d'après une formule mettant en oeuvre la valeur moyenne des points blancs et la valeur moyenne des points noirs, ce qui impose l'emploi d'un codeur auxiliaire pour décider si un point est blanc ou noir.

Dans la demande EP-A-0 150 001, est décrit un dispositif dans lequel le seuil, écrêté dans un limiteur, résulte de la sélection, de la plus petite parmi deux valeurs du signal d'analyse, l'une avancée, et l'autre retardée par rapport à la valeur comparée au seuil, ce qui impose l'emploi de circuits retardateurs.

Ces dispositifs connus ont pour inconvénients une relative complexité, et donc un coût relativement élevé, et le plus souvent une incapacité à restituer des plages noires d'une certaine taille, ou des caractères blancs, ou clairs, sur un fond foncé.

La présente invention vise à pallier ces inconvénients.

A cet effet, elle a pour objet un dispositif du type défini ci-dessus, caractérisé par le fait qu'il comprend des deuxièmes moyens de génération pour engendrer un signal frontière de valeur constante ou lentement variable et intermédiaire entre les deux valeurs extrêmes susceptibles d'être prises par ledit signal d'analyse d'image, et lesdits premiers moyens de génération sont agencés pour que la valeur dudit signal de seuil soit comprise entre ladite valeur moyenne sur le premier intervalle de temps du signal d'analyse d'image et ladite valeur du signal frontière.

Dans le dispositif de l'invention, le seuil reste toujours distinct de la valeur moyenne du signal, et les longues plages noires, ou blanches, sont ainsi convenablement rendues. Par exemple, pour une plage noire, la moyenne des valeurs prises par le signal est pratiquement nulle et donc inférieure à la valeur du signal frontière. Alors le seuil reste supérieur à cette moyenne, et il est décidé que le point comparé est noir tant que la valeur correspondante du signal d'analyse d'image reste pratiquement nulle. Ainsi, la plage noire est convenablement rendue. Il en serait de même pour une plage blanche.

De plus, le dispositif est apte à reproduire convenablement aussi bien des caractères noirs sur fond blanc que des caractères blancs sur fond noir, et ceci dans un même document. En effet, dans le cas de caractères noirs sur fond blanc, la valeur moyenne du signal d'analyse est très élevée, donc en principe supérieure à la valeur du signal frontière, et le seuil s'établit à une valeur comprise entre la valeur moyenne et la valeur du signal frontière, c'est-à-dire relativement élevée elle aussi, tout en restant, cependant, toujours inférieure à la valeur moyenne. Alors, les chances de détecter une baisse de niveau du signal, donc un point noir, sont élevées, puisque la valeur du seuil est élevée. Lorsque, par contre, le fond devient noir, la valeur moyenne du signal d'analyse devient très faible, donc inférieure à la valeur du signal frontière, et le seuil s'établit à une valeur comprise entre la valeur moyenne et la valeur du signal frontière, c'est-à-dire relativement faible, tout en restant supérieure à la valeur moyenne. Alors les chances de détecter une augmentation du niveau du signal, donc un point blanc, sont élevées.

Dans la forme de réalisation préférée, lesdits premiers moyens de génération sont agencés pour que ledit signal de seuil soit égal à la moyenne d'une somme pondérée dudit signal d'analyse d'image et dudit signal frontière.

Une telle forme de réalisation est particulièrement simple, et donc sûre et peu coûteuse.

Avantageusement, ladite somme pondérée est la somme dudit signal d'analyse d'image affecté d'un premier coefficient de pondération et dudit signal frontière affecté d'un deuxième coefficient de pondération, la somme desdits premier et deuxième coefficients de pondération est égale à l'unité, et ledit premier coefficient de pondération est supérieur audit deuxième coefficient de pondération.

Dans ce cas, le signal de seuil suit relativement fidèlement les variations de la valeur moyenne du signal d'analyse d'image, tout en restant inférieur à cette valeur moyenne lorsque celle-ci est élevée, et supérieur lorsqu'elle est faible.

Avantageusement encore, lesdits deuxièmes moyens de génération comprennent des premiers moyens de calcul, pour calculer une première valeur dudit signal frontière en réponse à un signal de commande.

Dans ce cas, l'utilisateur de l'appareil peut choisir le niveau du signal frontière pour adapter sa valeur à l'image ou au document à analyser, selon que le fond en est clair ou foncé par exemple. Un tel choix n'était pas prévu sur les dispositifs de l'art antérieur.

Avantageusement encore, lesdits deuxièmes moyens de génération comprennent des moyens pour déterminer et mémoriser la valeur extrême dudit signal d'analyse d'image résultant de l'analyse d'une plage blanche.

Ainsi, les facteurs qui peuvent affecter le niveau du signal d'analyse d'image correspondant au blanc, et faire varier ce niveau dans le temps, sont pris en compte. Ces facteurs sont le vieillissement du tube ou de la lampe qui éclaire le document analysé, par exemple, ou encore le temps écoulé depuis sa mise en marche, l'intensité lumineuse maximale n'étant pas atteinte instantanément.

Avantageusement encore, lesdits deuxièmes moyens de génération comprennent des deuxièmes moyens de calcul, pour calculer une deuxième valeur dudit signal frontière en réponse à la valeur moyenne, sur un deuxième intervalle de temps supérieur audit premier intervalle de temps, dudit signal d'analyse d'image, et, le cas échéant, des moyens pour sélectionner ladite première ou ladite deuxième valeur du signal frontière.

Dans ce cas, la valeur du signal frontière est calculée automatiquement et varie tout au long du document, ce qui est préférable pour certains types de documents, comme ceux comportant des zones très claires et des zones très foncées. En principe, il est alors possible de sélectionner soit ce mode de fonctionnement automatique, soit le mode de fonctionnement "manuel" où le niveau du signal frontière est choisi par l'utilisateur.

La présente invention sera mieux comprise à la lecture de la description suivante de la forme de réalisation préférée du dispositif de l'invention, faite en se référant aux dessins annexés, sur lesquels :

- la figure 1 représente un schéma par blocs d'un dispositif de transformation d'un signal d'analyse d'image selon l'invention,
- la figure 2 représente un schéma détaillé du circuit de génération du signal frontière du dispositif de la figure 1, et,
- la figure 3 représente un diagramme des variations, au cours du temps, du signal d'analyse d'image et du signal de seuil du dispositif de la figure 1.

Le dispositif de transformation de l'invention est destiné à transformer un signal d'analyse d'image V en un signal binaire VB.

Le signal d'analyse d'image V est délivré par le dispositif d'analyse de documents, non représenté, d'un télécopieur. Il s'agit ici d'un signal analogique dont l'amplitude varie à l'intérieur d'une plage limitée par deux valeurs extrêmes $V_n$ et $V_b$. La valeur $V_n$ est ici la valeur minimale, correspondant à du noir, et la valeur $V_b$ est la valeur maximale, correspondant à du blanc. Alors que la valeur $V_n$ est toujours la même, par exemple nulle, la valeur $V_b$ peut varier au cours du temps, en fonction du vieillissement du tube ou de la lampe d'éclairage du document, comme cela a déjà été signalé.

Le signal binaire VB est destiné à commander le dispositif d'impression de télécopieur si celui-ci fonctionne en mode local à la manière d'un photocopieur, ou être traité puis émis à distance si le télécopieur fonctionne en mode normal.

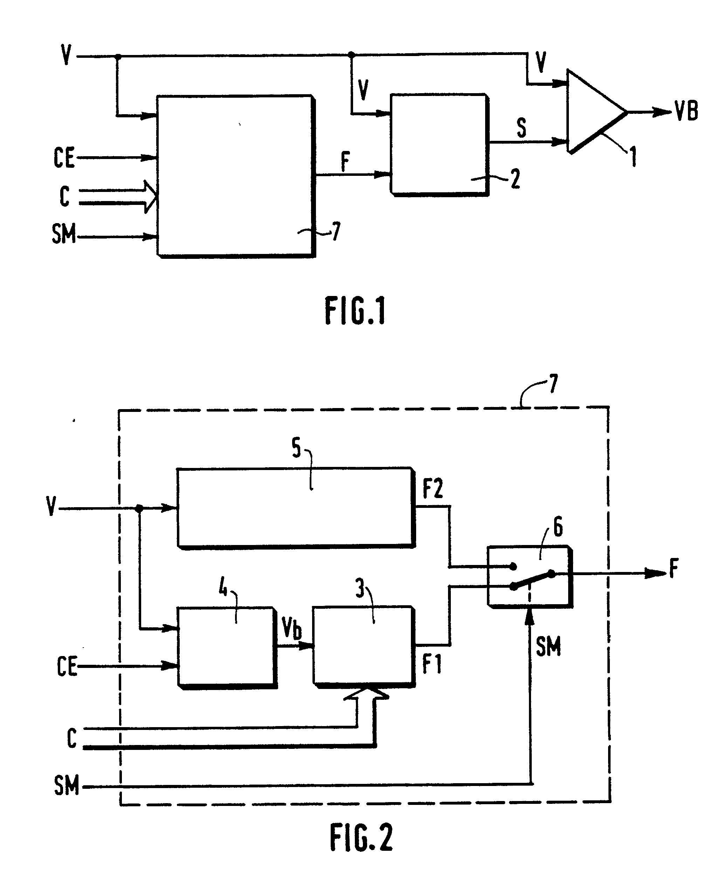

Pour transformer le signal V en signal VB, le dispositif de l'invention comprend, en référence à la figure 1, un comparateur 1 pourvu d'une première entrée recevant le signal V, d'une deuxième entrée recevant un signal de seuil S et d'une sortie délivrant le signal VB.

Un circuit 2 de génération du signal de seuil S est pourvu d'une première entrée recevant le signal V, d'une deuxième entrée recevant un signal frontière F, et d'une sortie délivrant le signal de seuil S. Un circuit 7 de génération du signal frontière F est pourvu d'une première entrée recevant le signal V, d'une deuxième entrée recevant un signal binaire CE de commande d'étalonnage, d'une troisième entrée recevant un signal numérique C de commande de la valeur du signal frontière F, d'une quatrième entrée recevant un signal binaire SM de sélection de mode de fonctionnement, et d'une sortie délivrant le signal frontière F.

Le circuit 2 est agencé pour que le signal de seuil S soit égal à la moyenne d'une somme pondérée SP du signal V et du signal frontière F.

La somme pondérée SP vaut :

$$SP = a V + b F \qquad (1)$$

a étant le coefficient de pondération affecté au signal V et b le coefficient de pondération affecté au signal F.

La moyenne de la somme SP qui donne naissance au signal de seuil S est effectuée sur un intervalle de temps correspondant aux m derniers points d'image analysés avant le point d'image dont l'intensité est comparée dans le comparateur 1. Ici, le signal de seuil S résulte d'une intégration analogique du signal de somme pondérée SP, de constante de temps égale à la durée d'analyse de m points d'image. Ici, on choisit un nombre m inférieur à 10, et des valeurs a et b telles que :

$$a = 0,75 \quad b = 0,25 \qquad (2)$$

Il n'est pas obligatoire de choisir ces valeurs, mais il faut que la relation suivante soit satisfaite :

$$a + b = 1 \qquad (3)$$

c'est-à-dire que la somme des deux coefficients de pondération a et b soit égale à 1, afin que la valeur du signal de somme pondérée SP soit toujours comprise entre la valeur du signal V et celle du signal frontière F.

D'autre part, il est préférable que le coefficient a qui affecte le signal V soit supérieur au coefficient b qui affecte le signal frontière F, soit :

$$a > b \qquad (4)$$

Dans ce cas, la valeur du signal SP reste plus proche de la valeur du signal V que de la valeur du signal frontière F, ce qui permet une meilleure détection des variations du signal V.

La conception d'un circuit électronique analogique qui réalise la fonction qui vient d'être définie pour le circuit 2 est à la portée de l'homme du métier, et le circuit 2 de génération du signal de seuil ne sera pas davantage décrit.

En se référant maintenant à la figure 2, le circuit 7 comprend un circuit 4 de détermination et de mémorisation de la valeur extrême $V_b$, pourvu d'une première entrée recevant le signal V, d'une deuxième entrée recevant le signal CE, et d'une sortie délivrant un signal de valeur $V_b$.

Le circuit 7 comprend également un circuit de calcul 3, pourvu d'une première entrée reliée à la sortie du circuit 4 de détermination et de mémorisation de la valeur $V_b$, d'une deuxième entrée recevant le signal numérique C, et d'une sortie délivrant un signal F1.

Le circuit 7 comprend ici également un circuit de calcul 5, pourvu d'une entrée recevant le signal V et d'une sortie délivrant un signal F2, ainsi qu'un commutateur 6, pour envoyer vers la sortie du circuit 7 soit le signal F1, soit le signal F2. Ici le commutateur 6 est commandable, et son entrée de commande reçoit le signal binaire SM de sélection de mode.

Le circuit 4 de détermination et de mémorisation de la valeur $V_b$ est agencé pour calculer et mémoriser la valeur du signal V appliqué à sa première entrée pendant que le signal CE appliqué à sa deuxième entrée est au niveau haut, par exemple.

Le télécopieur est agencé pour faire passer le signal CE au niveau haut juste avant l'analyse de chacun des documents, et il est prévu une bande blanche sur le support du papier qui se trouve alors analysée avant le document proprement dit.

Le circuit 4 comprend par exemple un comparateur qui, dès que le signal CE passe au niveau haut, compare au signal V un signal auxiliaire variable. Dès que l'égalité entre le signal V et le signal auxiliaire est détectée, ce dernier cesse de varier et sa valeur est mémorisée et appliquée à la sortie du circuit 4. Comme le signal CE ne passe au niveau haut que lorsque la plage blanche prévue sur le support de papier est analysée, le circuit 4 présente en permanence sur sa sortie la valeur $V_b$ qui correspond au blanc.

Le circuit de calcul 3 calcule le signal F1 en réponse au signal de commande C, et au signal de niveau constant $V_b$ en sortie du circuit 4.

Ici, le signal de commande C est un signal numérique codé sur n éléments binaires, ou bits, et le circuit 3 effectue le calcul :

$$F1 = V_n + (V_b - V_n) C/2^n \qquad (5)$$

La valeur $V_n$, en principe nulle, et en tous cas constante tout au long de la vie du télécopieur, est mémorisée dans le circuit 3. Ici, comme le circuit 2 est un circuit analogique, le circuit 3 comprend en sortie un convertisseur numérique-analogique. Le signal de commande C résulte d'un choix fait par l'utilisateur du télécopieur, choix effectué par exemple à l'aide du clavier prévu sur le télécopieur.

Le circuit de calcul 5 calcule le signal F2 en réponse ici à la valeur moyenne du signal V, effectuée sur un intervalle de temps correspondant aux p derniers points analysés avant le point d'image dont l'intensité est comparée dans le comparateur 1. Ici, le nombre p est notablement supérieur au nombre m de points d'image sur lequel est effectuée la moyenne de la somme pondérée SP dans le circuit 2. Le nombre p vaut environ 800, c'est-à-dire qu'il correspond à une demi-ligne d'analyse d'image. Comme dans le circuit 2, cette moyenne résulte d'une intégration analogique du signal V. La constante de temps est ici égale à la durée d'analyse de p points.

Le dispositif qui vient d'être décrit fonctionne comme suit.

On suppose tout d'abord que l'utilisateur sélectionne le mode manuel. Alors le signal SM commande le commutateur 6 pour que le signal F soit égal au signal F1. On suppose également que l'utilisateur choisit une valeur frontière placée au milieu des valeurs extrêmes $V_n$ et $V_b$. A cet effet, il programme un signal C égal à $2^{n-1}$, et la relation (5) devient

$$F1 = (V_n + V_b) /2 \qquad (5')$$

Du fait que la valeur $V_b$ en sortie du circuit 4 est réactualisée avant analyse de chaque document, il est tenu compte automatiquement des facteurs qui peuvent affecter son niveau, comme le vieillissement du tube, par exemple, et le signal F1, c'est-à-dire ici le signal frontière F, se trouve adapté en conséquence. Le signal F est ensuite de valeur constante tout au long de l'analyse du document.

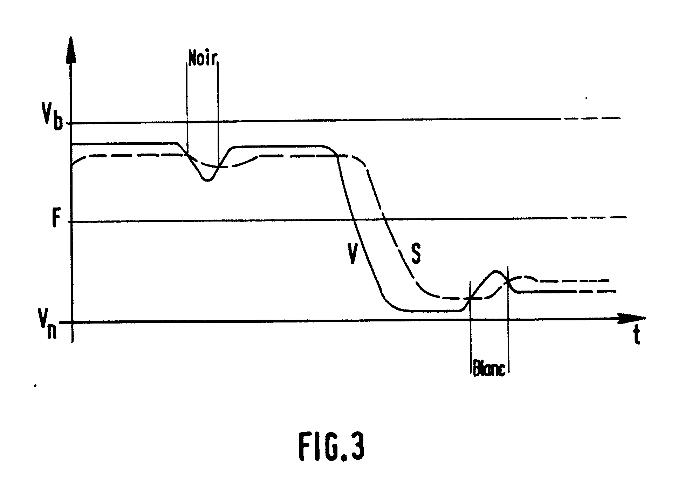

Comme le montre la figure 3, lorsque le signal V, représenté en trait plein, subit des fluctuations, le signal de seuil S représenté en trait pointillé suit avec un certain retard les fluctuations du signal V. Toutefois, même après une longue période où le signal V est constant, le signal de seuil S ne rattrape jamais le signal V mais lui reste toujours inférieur ou supérieur, selon que le signal V est établi à un niveau supérieur ou inférieur, respectivement, au signal frontière F.

Ceci est du au fait que, à cause de la formule (1) :

$$S = 0,75 V + 0,25 F \qquad (1)$$

le signal S a tendance à suivre les fluctuations du signal V, tout en étant cependant "tiré" vers le signal F.

La partie gauche de la figure 3 montre des paliers du signal V supérieurs au signal frontière F, et pour lesquels le signal de seuil S s'établit, avec un certain retard, à une valeur inférieure à celle du palier du signal V. Alors, les variations de la valeur instantanée du signal V, qui traduisent la présence de points foncés sur un fond clair seront très rapidement détectées par le comparateur 1.

Par contre, dans la partie droite de la figure, les paliers du signal V sont inférieurs au signal frontière F, et le signal de seuil S s'établit, avec un certain retard, à une valeur supérieure à celle des paliers du signal V. Alors, les variations de la valeur instantanée qui traduisent la présence de points clairs sur un fond foncé seront très rapidement détectées.

Naturellement, l'utilisateur peut adapter la valeur du signal F1 au type de document analysé en programmant en conséquence le signal de commande C. Pour analyser un document relativement sombre, l'utilisateur diminue le niveau du signal F1, alors que pour analyser un document relativement clair, il augmente le niveau du signal F1.

Par contre, pour certains types de documents comportant à la fois des zones très claires et des zones très foncées, il est préférable que la valeur du signal de frontière F soit calculée automatiquement, et varie au long du document. Le circuit 5 calcule le signal F2 qui répond à ces critères. Aussi, l'utilisateur, pour un tel document, sélectionne le mode automatique par l'intermédiaire du signal SM et le signal F est alors égal au signal F2. Dans ce cas, la valeur du signal frontière F est lentement variable.

Naturellement, la présente invention n'est pas limitée à la description qui vient d'être faite d'un dispositif dans lequel les circuits effectuent un traitement analogique, et il est à la portée de l'homme du métier de concevoir un dispositif conforme à l'invention dans lequel les circuits effectuent les traitements qui ont été décrits, mais de façon numérique.

De plus, il est possible d'envisager que le circuit 7 de génération du signal frontière ne comporte pas un ou plusieurs des circuits tels que les circuits 3, 4 et 5, si les fonctions de ces circuits sont jugées inutiles pour l'application considérée, ou si on veut réduire le coût du dispositif.

Enfin, si le dispositif de l'invention est particulièrement utile pour les télécopieurs, il est évidemment possible de l'utiliser dans d'autres types d'appareils.

## Revendications

1. Dispositif de transformation d'un signal d'analyse d'image (V) en un signal binaire (VB) comprenant des moyens de comparaison (1) de la valeur instantanée dudit signal d'analyse d'image (V) à la valeur d'un signal de seuil (S) et des premiers moyens de génération (2) pour engendrer ledit signal de seuil (S) en réponse à la valeur moyenne, sur un premier intervalle de temps, dudit signal d'analyse d'image (V), dispositif caractérisé par le fait qu'il comprend des deuxièmes moyens de génération (7) pour engendrer un signal frontière (F) de valeur constante ou lentement variable et intermédiaire entre les deux valeurs extrêmes ($V_n$, $V_b$) susceptibles d'être prises par ledit signal d'analyse d'image (V), et lesdits premiers moyens de génération (2) sont agencés pour que la valeur dudit signal de seuil (S) soit comprise entre ladite valeur moyenne sur le premier intervalle de temps du signal d'analyse d'image (V) et ladite valeur du signal frontière (F).

2. Dispositif selon la revendication 1, dans lequel lesdits premiers moyens de génération (2) sont agencés pour que ledit signal de seuil (S) soit égal à la moyenne d'une somme pondérée dudit signal d'analyse d'image (V) et dudit signal frontière (F).

3. Dispositif selon la revendication 2, dans lequel ladite somme pondérée est la somme dudit signal d'analyse d'image (V) affecté d'un premier coefficient de pondération et dudit signal frontière (F) affecté d'un deuxième coefficient de pondération, la somme desdits premier et deuxième coefficients de pondération est égale à l'unité, et ledit premier coefficient de pondération est supérieur audit deuxième coefficient de pondération.

4. Dispositif selon l'une des revendications 1 à 3, dans lequel lesdits deuxièmes moyens de génération (7) comprennent des premiers moyens de calcul (3), pour calculer une première valeur (F1) dudit signal frontière (F1) en réponse à un signal de commande (C).

5. Dispositif selon l'une des revendications 1 à 4, dans lequel lesdits deuxièmes moyens de génération (7) comprennent des moyens (4) pour déterminer et mémoriser la valeur extrême ($V_b$) dudit signal d'analyse d'image (V) résultant de l'analyse d'une plage blanche.

6. Dispositif selon l'une des revendications 1 à 5, dans lequel lesdits deuxièmes moyens de génération (7) comprennent des deuxièmes moyens de calcul (5), pour calculer une deuxième valeur (F2) dudit signal frontière (F) en réponse à la valeur moyenne, sur un deuxième intervalle de temps supérieur audit premier intervalle de temps, dudit signal d'analyse d'image (V), et, le cas échéant, des moyens (6) pour sélectionner ladite première (F1) ou ladite deuxième (F2) valeur du signal frontière (F).

FIG.1

FIG.2

FIG.3

Office européen
des brevets

**RAPPORT DE RECHERCHE
EUROPEENNE**

Numéro de la demande

**EP 90 40 2805**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | DE-A-3 433 493 (RICOH)<br>* Page 6, lignes 29-35; page 46, ligne 36 - page 47, ligne 36 * | 1 | H 04 N<br>1/40 |
| A,D | | 2-6 | |
| Y,D | EP-A-0 150 001 (FUJI)<br>* Page 1, lignes 22-32; page 5, ligne 25 - page 6, ligne 21 * | 1 | |
| A,D | | 2-6 | |
| A | EP-A-0 089 931 (OLIVETTI)<br>* Résumé * | 1,6 | |

DOMAINES TECHNIQUES
RECHERCHES (Int. Cl.5)

H 04 N

Le présent rapport de recherche a été établi pour toutes les revendications

| Lieu de la recherche | Date d'achèvement de la recherche | Examinateur |
|---|---|---|
| La Haye | 30 novembre 90 | GREVE M.P. |